# FASCICULE DE BREVET EUROPEEN

(11) **EP 4 599 213 B1**
(45) Date de publication et mention de la délivrance du brevet: **12.08.2026**
(21) Numéro de dépôt: 23783817.2
(22) Date de dépôt: 02.10.2023
(51) Int. Cl.: G01C 21/16

(54) **PROCÉDÉ DE NAVIGATION COLLABORATIVE POUR DES VÉHICULES DISPOSANT DE SOLUTIONS DE NAVIGATION DE PRÉCISIONS DIFFÉRENTES**
KOLLABORATIVES NAVIGATIONSVERFAHREN FÜR FAHRZEUGE MIT NAVIGATIONSLÖSUNGEN UNTERSCHIEDLICHER GENAUIGKEIT
COLLABORATIVE NAVIGATION METHOD FOR VEHICLES HAVING NAVIGATION SOLUTIONS OF DIFFERENT ACCURACIES

(30) Priorité: 03.10.2022 CA 3178281
(43) Date de publication de la demande: 13.08.2025
(73) Titulaire: Safran Electronics & Defense, 75015 Paris (FR)
(72) Inventeur: FEYEL, Philippe, 77550 MOISSY-CRAMAYEL (FR); ELIE, Philippe, 77550 MOISSY-CRAMAYEL (FR)
(74) Mandataire: Cabinet Boettcher
(86) Numéro de dépôt international: PCT/EP2023/077290
(87) Numéro de publication internationale: WO 2024/074473

(56) Documents cités:
- CN-A- 112 747 748
- US-A1- 2021 284 305
- REN RANZHEN ET AL: "Multi-AUV Cooperative Navigation Algorithm Based on Temporal Difference Method", JOURNAL OF MARINE SCIENCE AND ENGINEERING, vol. 10, no. 7, 12 July 2022 (2022-07-12), pages 955, XP093112785, ISSN: 2077-1312, DOI: 10.3390/jmse10070955
- LI WENLONG ET AL: "Cooperative positioning algorithm of swarm UAVs based on posterior linearization belief propagation", 2019 IEEE 3RD INFORMATION TECHNOLOGY, NETWORKING, ELECTRONIC AND AUTOMATION CONTROL CONFERENCE (ITNEC), IEEE, 15 March 2019 (2019-03-15), pages 1277 - 1282, XP033557712, DOI: 10.1109/ITNEC.2019.8729420
- XIONG JUN ET AL: "Cooperative positioning for low-cost close formation flight based on relative estimation and belief propagation", AEROSPACE SCIENCE AND TECHNOLOGY, ELSEVIER MASSON, FR, vol. 106, 17 July 2020 (2020-07-17), XP086302574, ISSN: 1270-9638, [retrieved on 20200717], DOI: 10.1016/J.AST.2020.106068

## Description

La présente invention concerne le domaine de la navigation de véhicules.

### ARRIERE PLAN DE L'INVENTION

De nos jours, de nombreux véhicules embarquent un dispositif de localisation associant une centrale de navigation inertielle et un récepteur GNSS appartenant à un système de navigation par satellites de type GPS, GALILEO, GLONASS, BEIDU. On rappelle qu'une centrale de navigation inertielle comprend au moins une unité de mesure inertielle qui comporte classiquement, d'une part, des accéléromètres disposés selon des axes d'un repère de mesure pour mesurer un vecteur de force spécifique dans ce repère de mesure et, d'autre part, des gyromètres pour mesurer l'orientation de ce repère de mesure par rapport à un repère inertiel. Le récepteur GNSS mesure des pseudo-distances le séparant de chacun des satellites dont il reçoit des signaux de navigation et calcule sa propre position à partir des pseudo-distances mesurées.

Les centrales de navigation inertielle fournissent des mesures en continu et sont très précises à court terme ; mais elles ont tendance à dériver avec le temps. La position calculée par les récepteurs est précise mais les signaux satellitaires ne sont pas toujours disponibles. On utilise donc généralement un filtrage de Kalman pour élaborer une navigation hybridée utilisant les mesures inertielles pour entretenir la position satellitaire entre deux réceptions de signaux satellitaires de navigation. En pratique, il arrive que deux véhicules équipés de dispositifs de navigation de précisions différentes évoluent dans un même espace. Il a été envisagé une navigation collaborative permettant à un premier véhicule pourvu du dispositif de navigation le moins précis d'utiliser des données de navigation provenant d'un deuxième véhicule pourvu du dispositif de navigation plus précis pour que le dispositif de navigation le moins précis puisse calculer une position en bénéficiant de la précision du dispositif de navigation le plus précis. La navigation collaborative envisagée peut faire appel à un filtrage de Kalman qui est généralement très gourmand en ressources de calcul.

Le document US 2021/284305 A1 divulgue un système collaboratif de navigation et de positionnement en eaux profondes, à faible coût et longue endurance.

### OBJET DE L'INVENTION

L'invention a notamment pour but de fournir une navigation collaborative nécessitant moins de ressources de calcul.

### RESUME DE L'INVENTION

A cet effet, on prévoit, selon l'invention un procédé selon la revendication 1.

Ainsi, le deuxième véhicule sert de référence de mesure de sorte que la mesure de position du deuxième véhicule et la mesure de l'écart de position entre les deux véhicules permettent de calculer l'erreur de navigation du premier dispositif de navigation à un instant donné. La connaissance de cette erreur de navigation permet ensuite de déterminer, au moyen d'un correcteur intégrateur, une commande pour annuler pour l'avenir ladite erreur. Le procédé de l'invention met donc en œuvre un contrôleur intégral qui est particulièrement robuste notamment vis-à-vis des biais constants tout en nécessitant moins de ressources de calcul qu'un filtrage de Kalman, et qui tient compte du modèle de dérive du dispositif de navigation dont les performances sont à améliorer.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :
La figure 1 est une représentation par bloc d'une boucle de rétroaction selon l'invention ;
La figure 2 est une vue schématique illustrant une première mise en œuvre du procédé de l'invention avec deux véhicules ;
La figure 3 est une vue schématique illustrant une deuxième mise en œuvre du procédé de l'invention avec trois véhicules ;

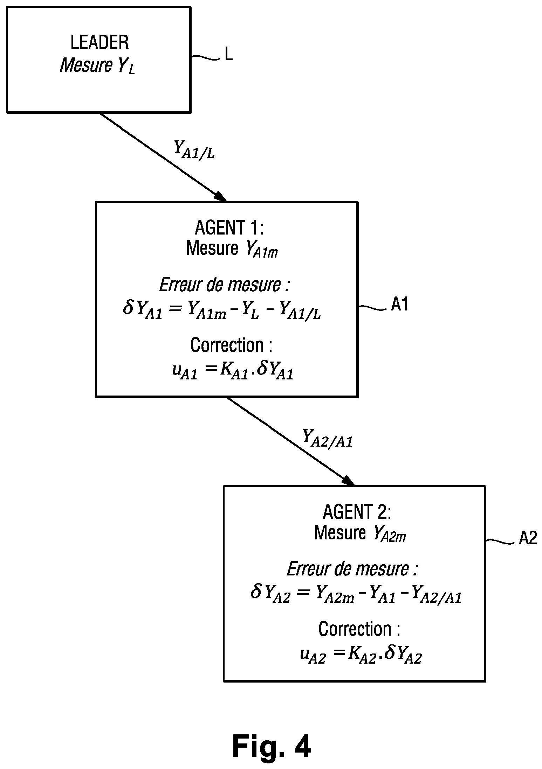

La figure 4 est une vue schématique illustrant une troisième mise en œuvre du procédé de l'invention avec trois véhicules.

### DESCRIPTION DETAILLEE DE L'INVENTION

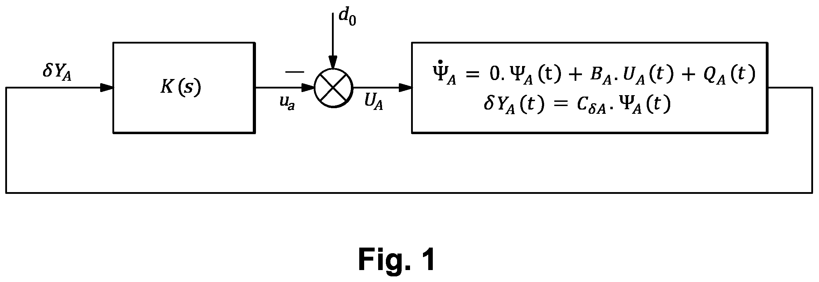

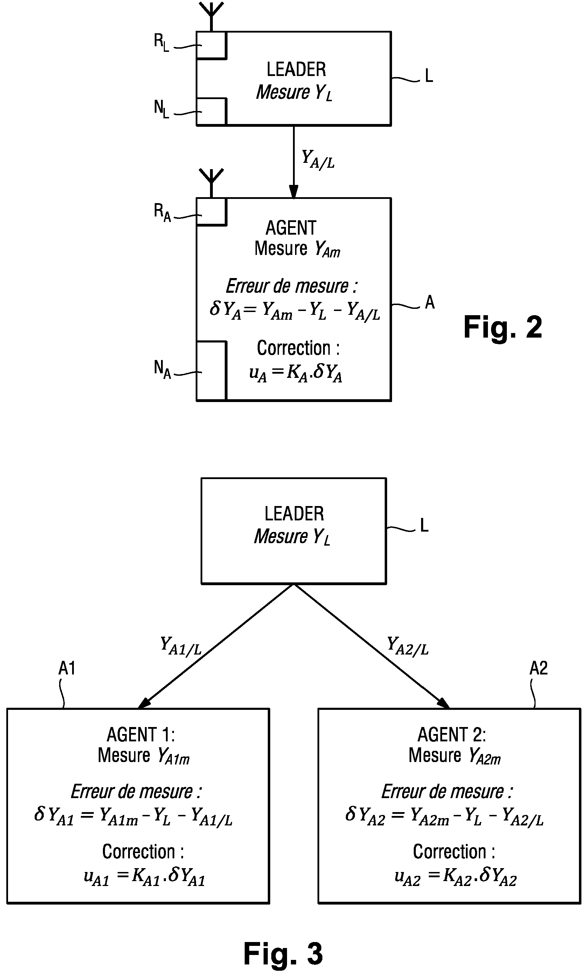

Le principe de l'invention va être expliqué en référence aux figures 1 et **2****.**

Le procédé de l'invention est ici mis en œuvre entre deux véhicules, à savoir un véhicule leader L comme un avion et un véhicule agent A comme un drone ou un missile.

Le véhicule leader L est équipé d'un dispositif de navigation N_{L} comportant une centrale de navigation inertielle.

Le véhicule agent A est lui aussi équipé d'un dispositif de navigation N_{A} comportant une centrale de navigation inertielle.

La centrale de navigation inertielle du véhicule leader L et la centrale de navigation inertielle du véhicule agent A comprennent chacune une unité de mesure inertielle qui comporte classiquement, d'une part, des accéléromètres disposés selon des axes d'un repère de mesure (repère local au boîtier de l'unité de mesure inertielle) pour mesurer un vecteur de force spécifique dans ce repère de mesure et, d'autre part, de gyromètres pour mesurer l'orientation de ce repère de mesure par rapport à un repère inertiel (repère absolu, fixe par rapport aux étoiles). Toutefois, les gyromètres de la centrale de navigation inertielle du véhicule leader L sont ici à résonateur vibrant hémisphérique GRH ou sont des gyrolasers tandis que les capteurs de la centrale de navigation inertielle du véhicule agent A sont des microsystèmes électromécaniques (ou MEMS). Il en résulte que la centrale de navigation inertielle du véhicule agent A est moins précise que la centrale de navigation inertielle du véhicule leader **L.** Les dispositifs de navigation N_{L} et N_{A} des véhicules L et A comprennent chacun une unité électronique de commande comportant un processeur et une mémoire contenant des programmes exécutés par le processeur pour exploiter les signaux fournis par l'unité de mesure inertielle et pour exécuter un algorithme mettant en œuvre le procédé de l'invention.

On rappelle que, d'une manière générale, les mesures fournies par les algorithmes d'une centrale de navigation inertielle qui exploite des mesures inertielles sont homogènes à des latitude (Lₐ), longitude (G), et altitude (Z) à l'image de la solution de localisation fournie par un récepteur GNSS. Le plan horizontal dans la géolocalisation inertielle étant découplé du plan vertical, la présente description ne s'intéressera qu'à la latitude (Lₐ) et la longitude (G). Aussi pour une centrale de mesure inertielle, la mesure Yₘ correspond à : ${Y}_{m} = \left[\begin{matrix}{L}_{a} \\ G\end{matrix}\right] + \left[\begin{matrix}δ {L}_{a} \\ δ G\end{matrix}\right] = Y + δ Y$ dans laquelle Yₘ est la position mesurée, δLₐ est l'erreur de latitude de l'unité de mesure inertielle, δG est l'erreur de longitude de l'unité de mesure inertielle, δY est l'erreur de position de l'unité de mesure inertielle. Chaque centrale inertielle de navigation possède son propre moyen de traitement, par exemple un filtre de Kalman, permettant l'estimation des latitudes et longitudes entachées d'erreur. Les erreurs δY proviennent des biais (biais des gyromètres majoritairement et biais des accéléromètres à un ordre plus faible, les accéléromètres étant généralement plus stables que les gyromètres car une fois les accéléromètres calibrés, ils ne varient que très peu) que l'on veut estimer pour compensation. Par une approximation linéaire, les erreurs de mesure sont reliées au biais gyrométrique par un modèle d'état : ${\dot{Ψ}}_{\left[i\right]} = 0 . {Ψ}_{\left[i\right]} + B . {d}_{\left[m\right]} + Q$ $δ Y = {C}_{δ} . {Ψ}_{\left[i\right]}$ dans lequel :
- Q est un bruit d'état usuel,
- B est une matrice de commande dépendant de la rotation *Tᵢₘ* permettant de passer du repère de mesure [m] au repère inertiel [i],
- *d_{[m]}* est le biais gyrométrique exprimé localement et s' écrit *d*_{[m]} *=* [*dₓ, d_{y},d_{z}*],
- *Cδ* est une matrice d'observation qui dépend de la période de rotation de la terre et de la latitude *Lₐ*,
- ψ[i] représente l'état des erreurs de mesure tel que $\left(\begin{matrix}δ {L}_{a} \\ δ G\end{matrix}\right) = \left(\begin{matrix}sin \left({ω}_{e}t\right) & - cos \left({ω}_{e}t\right) & 0 \\ tan \left({L}_{a}\right) cos \left({ω}_{e}t\right) & tan \left({L}_{a}\right) sin \left({ω}_{e}t\right) & - 1\end{matrix}\right) {Ψ}_{\left[i\right]}$ avec **Ψ_{[*i*]} = [Ψₓ,Ψ_{y},Ψ_{z}] = *Tᵢₘd*_{[*m*]} + *Q*** et ωₑ la période de rotation de la Terre

Les véhicules A et L comprennent en outre chacun un émetteur/récepteur de télécommunication R_{A} et R_{L} leur permettant d'entrer en communication l'un avec l'autre et d'échanger des données par exemple sous forme de signaux radioélectriques. L'émetteur/récepteur de télécommunication R_{A} du véhicule agent A est relié à l'unité électronique de commande du dispositif de navigation du véhicule agent A et l'émetteur/récepteur de télécommunication R_{L} du véhicule leader L est relié à l'unité électronique de commande du dispositif de navigation du véhicule leader L.

Le procédé de l'invention est mis en œuvre lorsque le véhicule leader L et le véhicule agent A évoluent dans la même zone d'espace et sont en communication parfaite, c'est-à-dire qu'ils peuvent échanger entre eux des informations de manière fiable. Dans la première mise en œuvre du procédé de l'invention, plus particulièrement illustrée à la figure 2, le véhicule leader L est en communication parfaite avec le véhicule agent A évoluant dans une même zone d'espace que le véhicule leader L.

Le procédé de l'invention débute par l'entrée en communication du dispositif de navigation du véhicule leader L avec le dispositif de navigation du véhicule agent A. Le dispositif de navigation du véhicule leader L et le dispositif de navigation du véhicule agent A se synchronisent pour mesurer au même instant de mesure :
- une première position Y_{Am} du véhicule agent A par le dispositif de navigation du véhicule agent A ;
- une deuxième position Y_{L} du véhicule leader L par le dispositif de navigation du véhicule leader L ;
- un écart de position Y_{A/L} entre le véhicule leader L et le véhicule agent A. Cet écart est mesuré en distance (coordonnées polaires) et projeté avec l'attitude du porteur du dispositif de mesure soit ici le leader. Le véhicule leader L effectue cette mesure par tout moyen approprié et par exemple au moyen d'une caméra optique associée à un traitement d'image, par une télémétrie laser, par radar...

Par « même instant », on entend soit le même instant, soit des instants suffisamment proches l'un de l'autre pour que l'écart temporel entre les deux instants soit compatible avec le gain de précision souhaité qu'il est possible d'obtenir par la mise en œuvre du procédé de l'invention. La mesure de position Y_{L} et la mesure d'écart de position Y_{A/L} sont transmises par le dispositif de navigation du véhicule leader L au dispositif de navigation du véhicule agent A, la suite du procédé étant mise en œuvre ici au niveau du dispositif de navigation du véhicule agent **A.** Selon le procédé de l'invention, l'algorithme mettant en œuvre le procédé de l'invention exploite la mesure de position Y_{L} et la mesure d'écart de position Y_{A/L} comme si elles étaient dépourvues d'erreur.

Au contraire, la mesure de position Y_{Am} est considérée comme affectée d'une erreur de navigation δY_{A} du dispositif de navigation N_{A} du véhicule A, telle que Y_{Am}=Y_{A}+δY_{A} avec Y_{A} la position réelle du véhicule agent A. L'erreur de navigation δY_{A} du dispositif de navigation N_{A} du véhicule agent A est donc définie par ledit algorithme comme δY_{A}=Y_{Am}-Y_{L}-Y_{A/L}, ce qui permet de calculer l'erreur de navigation δY_{A} à l'instant de mesure.

L'algorithme mettant en œuvre le procédé de l'invention est agencé pour modéliser une évolution de l'erreur de navigation δY_{A} par un modèle d'état et utiliser un correcteur intégrateur pur pour maintenir à zéro l'erreur de navigation δY_{A}.

Le modèle d'état est le suivant ${\dot{Ψ}}_{A} = 0 . {Ψ}_{A} \left(t\right) + {B}_{A} . \left({d}_{0}\left(t\right)+{u}_{A}\left(t\right)\right) + {Q}_{A} \left(t\right)$ $δ {Y}_{A} \left(t\right) = {C}_{δ A} . {Ψ}_{A} \left(t\right)$

Dans ce modèle :
- Ψ_{A}(t) est l'état de l'erreur de navigation,
- B_{A} est la matrice de commande,
- d₀(t) représente le biais capteur du premier dispositif de navigation à l'origine de l'erreur de navigation δY_{A}, ce biais capteur étant inconnu,
- u_{A}(t) est une commande,
- Q_{A}(t) est le bruit du modèle d'état,
- C_{δA} est la matrice d'observation ;

La commande u_{A}(t) est introduite au niveau du biais capteur de manière à minimiser l'erreur de navigation δY_{A}(t) de sorte que la commande u_{A}(t) correspond à une estimation du résiduel de biais capteur source de l'erreur de navigation δY_{A}(t). Il est important de noter que le but premier de la commande n'est pas d'annuler le terme ***δd*(*t*) = *d*₀(*t*) + *u_{A}*(*t*)** mais bien d'annuler l'erreur de mesure ***δY_{A}*(*t*)** engendrée par la perturbation inconnue constituée du biais gyro ***d*₀(*t*)*.***

La correction réalisée conformément au procédé de l'invention vise en pratique à annuler l'erreur de navigation δY_{A} en appliquant pour la commande u_{A}(t) une loi de commande telle que ${u}_{A} \left(s\right) = {K}_{A} \left(s\right) . δ {Y}_{A} \left(s\right)$ dans laquelle s est la variable de Laplace et K_{A}(s) est le correcteur. Toutes les méthodes connues dans le domaine de l'automatisme sont utilisables pour résoudre cette équation à la condition que le correcteur K_{A}(s) soit un intégrateur pur tel que ${K}_{A} \left(s\right) = \frac{{k}_{A} \left(s\right)}{s}$ qui amène l'erreur de navigation δY_{A} à tendre asymptotiquement vers zéro.

On obtient donc une boucle de rétroaction, représentée sur la figure 1, dans laquelle on corrige directement la mesure entrant dans l'observateur (on a noté sur la figure 1 U_{A} le terme de commande d₀-u_{A}).

On notera que l'emploi d'un bouclage fermé au lieu d'une compensation directe en boucle ouverte améliore la stabilité et la robustesse de la compensation vis-à-vis notamment des perturbations engendrées par certains défauts tels qu'un retard.

Il est possible de rendre le procédé de l'invention plus efficace en prenant en compte le biais accélérométrique ***f*_{[*m*]} = [*fₓ,f_{y},f_{z}*]** dans le calcul du biais capteur aboutissant à l'erreur de navigation. On a alors : $\left(\begin{matrix}δ {L}_{a} \\ δ G\end{matrix}\right) = \left(\begin{matrix}sin \left({ω}_{e}t\right) & - cos \left({ω}_{e}t\right) & 0 \\ tan \left({L}_{a}\right) cos \left({ω}_{e}t\right) & tan \left({L}_{a}\right) sin \left({ω}_{e}t\right) & - 1\end{matrix}\right) {Ψ}_{\left[i\right]} + \left(\begin{matrix}\frac{1}{g} & 0 & 0 \\ 0 & \frac{1}{gcos \left({L}_{a}\right)} & 0\end{matrix}\right) {T}_{gm} . {f}_{m}$

Dans une deuxième mise en œuvre illustrée sur la figure 3, le véhicule leader L est en communication parfaite avec un premier véhicule agent A1 et un deuxième véhicule agent A2. Les véhicules agents A1 et A2 évoluent avec le véhicule leader L dans la même zone d'espace. Le véhicule agent A1 et le véhicule agent A2 ont des dispositifs de navigation de précision équivalente.

Le procédé selon l'invention est mis en œuvre indépendamment, d'une part, entre le véhicule leader L et le véhicule agent A1, et, d'autre part, entre le véhicule leader L et le véhicule agent A2.

On a donc, pour le véhicule agent A1 :
- une mesure de position Y_{A1m} et une position vraie Y_{A1},
- une mesure d'écart de position Y_{A1/L},
- une erreur de navigation δY_{A1}=Y_{A1m}-Y_{L}-Y_{A1/L},
- une correction **u_{A1}(s) *=* K_{A1}(s).δY_{A1}(s).**

On a, pour le véhicule agent A2 :
- une mesure de position Y_{A2m} et une position vraie Y_{A2},
- une mesure d'écart de position Y_{A2/L},
- une erreur de navigation δY_{A2}=Y_{A2m}-Y_{L}-Y_{A2/L},
- une correction **u_{A2}(s) = K_{A2}(s).δY_{A2}(s).**

Dans une troisième mise en œuvre illustrée sur la figure 3, le véhicule leader L est en communication parfaite avec un premier véhicule agent A1 qui est lui-même en communication parfaite avec un deuxième véhicule agent A2. Le véhicule leader L n'est pas en communication avec le deuxième véhicule agent A2. Le véhicule agent A1 évolue dans une même zone d'espace avec le véhicule leader L. Les véhicules agents A1 et A2 évoluent dans une même zone d'espace mais le véhicule agent A2 n'évolue pas dans la même zone d'espace que le véhicule leader L.

Le véhicule agent A1 et le véhicule agent A2 ont des dispositifs de navigation de précision équivalente. On établit une navigation collaborative entre le véhicule agent A1 et le véhicule agent A2 en considérant que le dispositif de navigation du véhicule agent A1 est en pratique plus précis que le dispositif de navigation du véhicule agent A2 du fait de la navigation collaborative du véhicule agent A1 avec le véhicule leader L.

Le procédé selon l'invention est mis en œuvre en cascade :
- premièrement, entre le véhicule leader L et le véhicule agent A1, et
- deuxièmement, entre le véhicule agent A1 et le véhicule agent A2.

On a donc, pour le véhicule agent A1 :
- une mesure de position Y_{A1m} et une position vraie Y_{A1},
- une mesure d'écart de position Y_{A1/L},
- une erreur de navigation δY_{A1}=Y_{A1m}-Y_{L}-Y_{A1/L},
- une correction **u_{A1}(s) = K_{A1}(s). δY_{A1}(s)**.

On a, pour le véhicule agent A2 :
- une mesure de position Y_{A2m} et une position vraie Y_{A2},
- une mesure d'écart de position Y_{A2/A1},
- une erreur de navigation δY_{A2}=Y_{A2m}-Y_{A1}-Y_{A2/A1},
- une correction **u_{A2}(s) = K_{A2}(s).δY_{A2}(s).**

L'écart de position est mesuré en distance (coordonnées polaires) et projeté avec l'attitude du porteur du dispositif de mesure soit le leader L en ce qui concerne l'écart Y_{A1/L} ou l'agent A1 en ce qui concerne l'écart Y_{A1/A2}. Dans cette troisième mise en œuvre, la dynamique de la compensation de la dérive du véhicule agent A2 est très dépendante de la compensation de la dérive du véhicule agent A1. Ceci peut être dommageable en fonction de l'emploi que l'on veut faire des mesures de l'unité de mesure inertielle du véhicule agent A2. Asymptotiquement, on retrouve bien ***Y_{A2m}*(s) *= Y_{A2}(s)*** si K_{A1} (s) et K_{A2}(s) sont intégrateurs, mais la dynamique de compensation du véhicule agent A2 est naturellement perturbée par celle du véhicule agent A1. On prévoira de préférence une action d'anticipation/resynchronisation (somme toute limitée) sur la mesure du véhicule agent A1 transmise au véhicule agent A2 pour compenser cette perturbation.

Bien entendu, l'invention n'est pas limitée au mode de réalisation décrit mais englobe toute variante entrant dans le champ de l'invention telle que définie par les revendications.

En particulier, les dispositifs de navigation peuvent avoir une structure différente de celles décrites et comprendre par exemple un dispositif de visée stellaire ou un récepteur GNSS...

Avec l'invention, on obtient notamment une hybridation alternative au filtrage de Kalman pour des cas particuliers de dérive constante d'unité de mesure inertielle. Néanmoins, le procédé de l'invention peut être mis en œuvre à la place ou en parallèle d'un filtrage de Kalman.

Le procédé de l'invention est utilisable avec plus de deux agents en cascade. Evidemment, plus le nombre d'agents en cascade est important, plus la dynamique de l'unité de mesure inertielle de l'agent en bout de chaine sera impactée. Il faudra prendre en compte cet impact dans l'emploi de l'unité de mesure inertielle en question. Une synthèse simultanée des différents contrôleurs pourrait être à envisager pour identifier la solution optimale.

Le modèle d'état peut être différent de celui décrit et comprendre plus ou moins de termes, et par exemple intégrer également l'erreur d'altitude.

L'invention est applicable à tout type de véhicules, pilotés ou non, et par exemple des véhicules aériens, terrestres, aquatiques, spatiaux ou un mixte de ceux-ci.

## Revendications

1. Procédé de navigation collaborative entre au moins un premier véhicule (A) et un deuxième véhicule (L) évoluant dans une même zone d'espace, le premier véhicule (A) étant équipé d'un premier dispositif de navigation N_{A} moins précis qu'un deuxième dispositif de navigation N_{L} équipant le deuxième véhicule (L), le procédé comprenant :
- au même instant, faire mesurer une première position Y_{Am} du premier véhicule (A) par le premier dispositif de navigation (N_{A}) et une deuxième position Y_{L} du deuxième véhicule (L) par le deuxième dispositif de navigation (N_{L}) ;
- mesurer un écart de position Y_{A/L} entre les deux véhicules tel que δY_{A}=Y_{Am}-Y_{L}-Y_{A/L} avec Y_{A} une position réelle du premier véhicule et δY_{A} une erreur de navigation du premier dispositif de navigation telle que Y_{Am}=Y_{A}+δY_{A} ;
- modéliser une évolution de l'erreur de navigation δY_{A} par un modèle d'état comprenant une commande utilisant un correcteur intégrateur pur pour maintenir à zéro l'erreur de navigation δY_{A}.

2. Procédé selon la revendication 1, dans lequel le modèle d'état est le suivant ${\dot{Ψ}}_{A} = 0 . {Ψ}_{A} \left(t\right) + {B}_{A} . \left({d}_{0}\left(t\right)+{u}_{A}\left(t\right)\right) + {Q}_{A} \left(t\right)$ $δ {Y}_{A} \left(t\right) = {C}_{δ A} . {Ψ}_{A} \left(t\right)$
dans lequel Ψ_{A}(t) est l'état de l'erreur de navigation, B_{A} est une matrice de commande, d₀(t) représente un biais capteur inconnu du premier dispositif de navigation à l'origine de l'erreur de navigation δY_{A}, u_{A}(t) est une commande, Q_{A}(t) est un bruit du modèle, C_{δA} est une matrice d'observation ;
et dans lequel la correction vise à annuler l'erreur de navigation δY_{A} en appliquant une loi de commande telle que ${u}_{A} \left(s\right) = K \left(s\right) . δ {Y}_{A} \left(s\right)$
dans laquelle s est la variable de Laplace et K(s) est le correcteur intégrateur pur tel que $K \left(s\right) = \frac{k \left(s\right)}{s}$

3. Procédé selon la revendication 1 ou 2, dans lequel le dispositif de navigation comprend au moins une unité de mesure inertielle et le biais capteur comprend un biais gyrométrique résiduel.

4. Procédé selon la revendication 3, dans lequel le biais capteur comprend également un biais accélérométrique résiduel.

5. Procédé selon la revendication 1, mis en œuvre par plusieurs premiers véhicules (A1, A2) évoluant dans la même zone d'espace que le deuxième véhicule (L).

6. Procédé selon la revendication 1, dans lequel un troisième véhicule (A2) évolue dans une même zone d'espace que le premier véhicule (A1), le troisième véhicule (A2) étant équipé d'un troisième dispositif de navigation sensiblement de même précision intrinsèque que le premier dispositif de navigation, et dans lequel on établit une navigation collaborative entre le premier véhicule (A1) et le troisième véhicule (A2) en considérant que le premier dispositif de navigation est en pratique plus précis que le troisième dispositif de navigation du fait de la navigation collaborative du premier véhicule (A1) avec le deuxième véhicule (L).

7. Procédé selon l'une quelconque des revendications précédentes, dans lequel le premier véhicule (A1) est un drone et le deuxième véhicule est un véhicule piloté (L).

## Patentansprüche

1. Verfahren zur kollaborativen Navigation zwischen zumindest einem ersten Fahrzeug (A) und einem zweiten Fahrzeug (L), die sich in ein und derselben Umgebungszone bewegen, wobei das erste Fahrzeug (A) mit einer ersten Navigationsvorrichtung N_{A}, ausgestattet ist, die weniger präziser ist, als eine in dem zweiten Fahrzeug (L) mitgeführte zweite Navigationsvorrichtung N_{L}, wobei das Verfahren umfasst, dass:
- veranlasst wird, dass zum selben Zeitpunkt von der ersten Navigationsvorrichtung (N_{A}) eine erste Position Y_{Am} des ersten Fahrzeugs (A) und von der zweiten Navigationsvorrichtung (N_{L}) eine zweite Position Y_{L} des zweiten Fahrzeugs (L) gemessen wird;
- ein Positionsabstand Y_{A/L} zwischen den beiden Fahrzeugen mittels der Gleichung δY_{A}=Y_{Am}-Y_{L}-Y_{A/L} gemessen wird, mit Y_{A} als reeller Position des ersten Fahrzeugs und δY_{A} als Navigationsfehler der ersten Navigationsvorrichtung, so dass Y_{Am}=Y_{A}+δY_{A};
- ein Entwicklungsverlauf des Navigationsfehlers δY_{A} durch ein Zustandsmodell modelliert wird, das einen Regler umfasst, der einen reinen Integrator-Korrektor verwendet, um den Navigationsfehler δY_{A} auf Null zu halten.

2. Verfahren nach Anspruch 1, wobei folgendes Zustandsmodell zum Einsatz kommt: ${\dot{Ψ}}_{A} = 0 . {Ψ}_{A} \left(t\right) + {B}_{A} . \left({d}_{0}\left(t\right)+{u}_{A}\left(t\right)\right) + {Q}_{A} \left(t\right)$ $δ {Y}_{A} \left(t\right) = {C}_{δ A} . {Ψ}_{A} \left(t\right)$
wobei Ψ_{A}(t) der Status des Navigationsfehlers ist, B_{A} eine Steuermatrix ist, d₀(t) eine unbekannte Sensorabweichung der ersten Navigationsvorrichtung darstellt, die den Navigationsfehler δY_{A} verursacht hat, u_{A}(t) ein Befehl ist, Q_{A}(t) ein Prozessrauschen ist, C_{δA} eine Beobachtungsmatrix ist;
und wobei die Korrektur darauf abzielt, den Navigationsfehler unter Anwendung eines Regelgesetzes zu beseitigen, derart, dass: ${u}_{A} \left(s\right) = K \left(s\right) . δ {Y}_{A} \left(s\right)$
wobei s die Laplace-Variable ist, und K(s) der reine Integrator-Korrektor ist, sodass $K \left(s\right) = \frac{k \left(s\right)}{s}$.

3. Verfahren nach Anspruch 1 oder 2, wobei die Navigationsvorrichtung zumindest eine Trägheitsmesseinheit umfasst, und die Sensorabweichung eine Gyrometer-Restabweichung umfasst.

4. Verfahren nach Anspruch 3, wobei die Sensorabweichung auch eine Beschleunigungssensor-Restabweichung umfasst.

5. Verfahren nach Anspruch 1, welches von mehreren ersten Fahrzeugen (A1, A2) ausgeführt wird, die sich in derselben Umgebungszone wie das zweite Fahrzeug (L) bewegen.

6. Verfahren nach Anspruch 1, wobei sich ein drittes Fahrzeug (A2) in ein und derselben Umgebungszone wie das erste Fahrzeug (A1) bewegt, wobei das dritte Fahrzeug (A2) mit einer dritten Navigationsvorrichtung ausgestattet ist, die über dieselbe intrinsische Genauigkeit verfügt, wie die erste Navigationsvorrichtung, und wobei eine kollaborative Navigation zwischen dem ersten Fahrzeug (A1) und dem dritten Fahrzeug (A2) hergestellt wird, wobei es zu bedenken gilt, dass die erste Navigationsvorrichtung aufgrund der kollaborativen Navigation zwischen dem ersten Fahrzeug (A1) und dem zweiten Fahrzeug (L) in der Praxis präziser ist als die dritte Navigationsvorrichtung.

7. Verfahren nach einem der vorhergehenden Ansprüche, wobei es sich bei dem ersten Fahrzeug (A1) um eine Drohne und bei dem zweiten Fahrzeug um ein bemanntes Fahrzeug (L) handelt.

## Claims

1. A method of collaborative navigation between at least a first vehicle (A) and a second vehicle (L) moving in the same space area, the first vehicle (A) being equipped with a first navigation device N_{A} that is less accurate than a second navigation device N_{L} equipping the second vehicle (L), the method comprising:
- at the same time, measuring a first position Y_{Am} of the first vehicle (A) by the first navigation device (N_{A}) and a second position Y_{L} of the second vehicle (L) by the second navigation device (N_{L});
- measure a position deviation Y_{A/L} between the two vehicles such that δY_{A}=Y_{AM}-Y_{L}-Y_{A/L} with Y_{A} an actual position of the first vehicle and δY_{A} a navigation error of the first navigation device such that Y_{Am}=Y_{A}+δY_{A};
- model an evolution of the navigation error δY_{A} by a state model comprising a control using a pure integrating corrector to maintain the navigation error δY_{A} at zero.

2. The method according to claim 1, wherein the state model has the form: ${\dot{Ψ}}_{A} = 0 . {Ψ}_{A} \left(t\right) + {B}_{A} . \left({d}_{0}\left(t\right)+{u}_{A}\left(t\right)\right) + {Q}_{A} \left(t\right)$ ${δY}_{A} \left(t\right) = {C}_{δA} . {Ψ}_{A} \left(t\right)$
wherein *Ψ_{A}(t)* is the state of the navigation error, B_{A} is a control matrix, d₀(t) represents an unknown sensor bias of the first navigation device causing the navigation error δY_{A}, u_{A}(t) is a control, Q_{A}(t) is a model noise, C_{δA} is an observation matrix;
and wherein the correction aims to cancel the navigation error δY_{A} by applying a control law such as ${u}_{A} \left(s\right) = K \left(s\right) . {δY}_{A} \left(s\right)$
in which s is the Laplace variable and K(s) is the pure integrating corrector such that $K \left(s\right) = \frac{k \left(s\right)}{s}$.

3. The method according to claim 1 or claim 2, wherein the navigation device comprises at least one inertial measurement unit and the sensor bias comprises a residual gyrometric bias.

4. The method according to claim 3, wherein the sensor bias also comprises a residual accelerometric bias.

5. The method according to claim 1, implemented by a plurality of first vehicles (A1, A2) moving in the same space area as the second vehicle (L).

6. The method according to claim 1, wherein a third vehicle (A2) moves in the same space area as the first vehicle (A1), the third vehicle (A2) being equipped with a third navigation device having substantially the same intrinsic accuracy as the first navigation device, and wherein collaborative navigation is established between the first vehicle (A1) and the third vehicle (A2) by considering that the first navigation device is in practice more accurate than the third navigation device because of the collaborative navigation of the first vehicle (A1) with the second vehicle (L).

7. The method according to any one of the preceding claims, wherein the first vehicle (A1) is a drone and the second vehicle is a piloted vehicle (L).
